# EUROPEAN PATENT APPLICATION

(11) **EP 4 683 404 A1**
(43) Date of publication of application: **21.01.2026**
(21) Application number: 23926731.3
(22) Date of filing: 14.03.2023
(51) Int. Cl.: H04W 68/00

(54) **COMMUNICATION METHOD AND APPARATUS, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2023/081323
(87) International publication number: WO 2024/187372

(57) **Abstract**

Provided in the present disclosure are a communication method and apparatus, and a readable storage medium. The method comprises: sending a paging message to a user equipment, wherein the paging message comprises a group identifier associated with a user equipment to be paged. In the method of the present disclosure, a network device sends the paging message to the user equipment, so as to inform the user equipment of the group identifier associated with the user equipment to be paged. Thus, during the process of determining, by means of the group identifier, the user equipment to be paged, the network device may page more user equipments at a time, thereby improving the paging efficiency, and being more suitable for a communication scenario in which the connection density of user equipments is high.

## Description

### TECHNICAL FIELD

The present disclosure relates to wireless communication technologies, and in particular to a communication method, a communication device, and a readable storage medium.

### BACKGROUND

Ambient Internet of Things (Ambient-IoT) is a type of IoT. Compared to cellular-based Narrow Band Internet of Things (NB-IoT) terminals, Ambient-IoT terminals are less complex, less expensive, and require less maintenance. A key feature of the Ambient-IoT terminals is that they lack batteries and are activated and powered by received electromagnetic signals. Alternatively, the Ambient-IoT terminals may have batteries with a small amount of battery storage function, but these batteries do not require manual charging. Instead, they can draw a small amount of battery energy from external energy, for example, by obtaining external electromagnetic waves, heat, or kinetic energy.

In addition, compared with related IoTs such as NB-IoT, Ambient-IoT type communication networks will support a number of terminals that are several orders of magnitude higher in connection density than the related IoTs.

### SUMMARY

The present disclosure provides a communication method, a communication device, and a readable storage medium.

In a first aspect, the present disclosure provides a communication method, which is performed by a network device. The method includes:
sending a paging message to a user equipment, wherein the paging message includes a group identity associated with a paged user equipment.

In the method of the present disclosure, the network device sends the paging message to the user equipment to inform the user equipment of the group identity of the paged user equipment, so that in a processing of determining the paged user equipment through the group identity, the network device can page more user equipments at one time, improving paging efficiency and making it more suitable for communication scenarios with a high density of user equipment connections.

In some implementations, the group identity includes group identities of different types of user equipment groups, and the different types of user equipment groups are divided according to different user equipment attributes.

In some implementations, the user equipment is associated with one or more group identities.

In some implementations, the paging message includes one or more paged user equipment sets and a group identity of at least one type of user equipment group corresponding to each paged user equipment set, and each paged user equipment set is determined according to the group identity of the corresponding at least one type of user equipment group.

In some implementations, each paged user equipment set includes a user equipment associated with group identities of all types of user equipment groups in the corresponding at least one type of user equipment group.

In some implementations, the method further includes:
sending indication information to the user equipment, wherein the indication information is configured to indicate a network access parameter of a paged user equipment set.

In some implementations, the indication information includes a network access parameter corresponding to each paged user equipment set.

In some implementations, the network access parameter includes at least one of:
a backoff duration for random access;
a frequency domain location of a random access resource; or
a code domain resource of the random access resource.

In some implementations, the user equipment attribute is one of:
a service provider;
a geographic location of the user equipment;
a priority of the user equipment; or
a service type.

In some implementations, the group identity associated with the user equipment is defined by a protocol, or configured by the network device, or configured by a core network device.

In a second aspect, the present disclosure provides a communication method, which is performed by a user equipment. The method includes:
receiving a paging message sent by a network device, wherein the paging message includes a group identity associated with a paged user equipment; and
determining whether to initiate random access according to the paging message.

In some implementations, the group identity includes group identities of different types of user equipment groups, and the different types of user equipment groups are divided according to different user equipment attributes.

In some implementations, the paging message includes one or more paged user equipment sets and a group identity of at least one type of user equipment group corresponding to each paged user equipment set, and each paged user equipment set is determined according to the group identity of the corresponding at least one type of user equipment group.

In some implementations, determining whether to initiate the random access according to the paging message includes:
when the user equipment belongs to any paged user equipment set, initiating the random access to the network device;
wherein each paged user equipment set includes a user equipment associated with group identities of all types of user equipment groups in the corresponding at least one type of user equipment group.

In some implementations, the method further includes:
receiving indication information sent by the network device, wherein the indication information is configured to indicate a network access parameter of a paged user equipment set.

In some implementations, the indication information includes a network access parameter corresponding to each paged user equipment set.

In some implementations, the network access parameter includes at least one of:
a backoff duration for random access;
a frequency domain location of a random access resource; or
a code domain resource of the random access resource.

In some implementations, determining whether to initiate the random access according to the paging message includes:
when it is required to initiate the random access, initiating the random access according to a network access parameter corresponding to a paged user equipment set to which the user equipment belongs.

In some implementations, the user equipment attribute is one of:
a service provider;
a geographic location of the user equipment;
a priority of the user equipment; or
a service type.

In some implementations, the group identity associated with the user equipment is defined by a protocol, or configured by the network device, or configured by a core network device.

In a third aspect, the present disclosure provides a communication device, and the device may be configured to perform steps performed by the network device in the first aspect or any possible design thereof. The network device may implement each function in the above-mentioned methods in the form of a hardware structure, a software module, or a combination of the hardware structure and the software module.

When the device shown in the third aspect is implemented by the software module, the device may include a transceiving module, and the transceiving module may be configured to support the communication device to perform communication.

When performing steps of the above first aspect, the transceiving module is configured to send a paging message to a user equipment, wherein the paging message includes a group identity associated with a paged user equipment.

In a fourth aspect, the present disclosure provides a communication device, and the device may be configured to perform steps performed by the user equipment in the second aspect or any possible design thereof. The user equipment may implement each function in the above-mentioned methods in the form of a hardware structure, a software module, or a combination of the hardware structure and the software module.

When the device shown in the fourth aspect is implemented by the software module, the device may include a transceiving module and a processing module coupled to each other, the transceiving module may be configured to support the communication device to perform communication, and the processing module may be used by the communication device to perform processing operations, such as generating information/messages to be sent, or processing received signals to obtain information/messages.

When performing steps of the above second aspect, the transceiving module is configured to receive a paging message sent by a network device, wherein the paging message includes a group identity associated with a paged user equipment; and
the processing module is configured to determine whether to initiate random access according to the paging message.

**In** a fifth aspect, the present disclosure provides a network device, including a processor and a memory; the memory is configured to store a computer program; and the processor is configured to execute the computer program to implement the first aspect or any possible design thereof.

**In** a sixth aspect, the present disclosure provides a user equipment, including a processor and a memory; the memory is configured to store a computer program; and the processor is configured to execute the computer program to implement the second aspect or any possible design thereof.

**In** a seventh aspect, the present disclosure provides a computer-readable storage medium having instructions (or called computer programs, programs) stored thereon, wherein the instructions, when invoked and executed on a computer, cause the computer to perform the first aspect or any possible design thereof.

**In** an eighth aspect, the present disclosure provides a computer-readable storage medium having instructions (or called computer programs, programs) stored thereon, wherein the instructions, when invoked and executed on a computer, cause the computer to perform the second aspect or any possible design thereof.

It is to be understood that the foregoing general description and the following detailed description are exemplary and explanatory only and are not restrictive of the present disclosure.

### BRIEF DESCRIPTION OF THE DRAWINGS

The accompanying drawings described herein are used to provide a further understanding of embodiments of the present disclosure, and constitute a part of the present disclosure. The illustrative examples and descriptions of embodiments of the present disclosure are used to explain the embodiments of the present disclosure without constituting any improper limitations on the embodiments of the present disclosure. In the drawings:

The accompanying drawings, which are incorporated in and constitute a part of this specification, illustrate embodiments consistent with the present disclosure, and together with the description serve to explain the principles of the embodiments of the present disclosure.
FIG. 1 is a schematic diagram of a wireless communication system architecture provided by an embodiment of the present disclosure;
FIG. 2 shows an interactive flowchart of a communication method according to an example embodiment;
FIG. 3 shows a flowchart of a communication method according to an example embodiment;
FIG. 4 shows a flowchart of another communication method according to an example embodiment;
FIG. 5 shows a flowchart of a communication method according to another example embodiment;
FIG. 6 shows a flowchart of a communication method according to another example embodiment;
FIG. 7 shows a block diagram of a communication device according to an example embodiment;
FIG. 8 shows a block diagram of a network device according to an example embodiment;
FIG. 9 shows a block diagram of a communication device according to an example embodiment; and
FIG. 10 shows a block diagram of a user equipment according to an example embodiment.

### DETAILED DESCRIPTION

Embodiments of the present disclosure will now be further described with reference to the accompanying drawings and specific implementations.

Embodiments will be described in detail herein, examples of which are illustrated in the accompanying drawings. Where the following description refers to the drawings, the same numerals in different drawings refer to the same or similar elements unless otherwise indicated. The implementations described in the following embodiments are not intended to represent all implementations consistent with embodiments of the present disclosures. Rather, they are merely examples of apparatus and methods consistent with some aspects of the present disclosure as defined in the appended claims.

The terms used in embodiments of the present disclosure are merely for the purpose of describing particular embodiments and are not intended to limit the embodiments of the present disclosure. As used in the embodiments of the present disclosure and the appended claims, the singular forms "a" and "the" are intended to include the plural forms as well, unless the context clearly indicates otherwise. It should also be understood that the term "and/or" as used herein refers to and includes any or all possible combinations of one or more of the associated listed items.

It should be understood that although the terms first, second, third, etc. may be used in embodiments of the present disclosure to describe various information, such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if' as used herein can be interpreted as "upon" or "when" or "in response to determination".

Embodiments of the present disclosure are described in detail below, examples of which are shown in the accompanying drawings, where the same or similar reference numerals throughout represent the same or similar elements. The embodiments described below with reference to the accompanying drawings are illustrative and are intended to explain the present disclosure, and should not be construed as limiting the present disclosure.

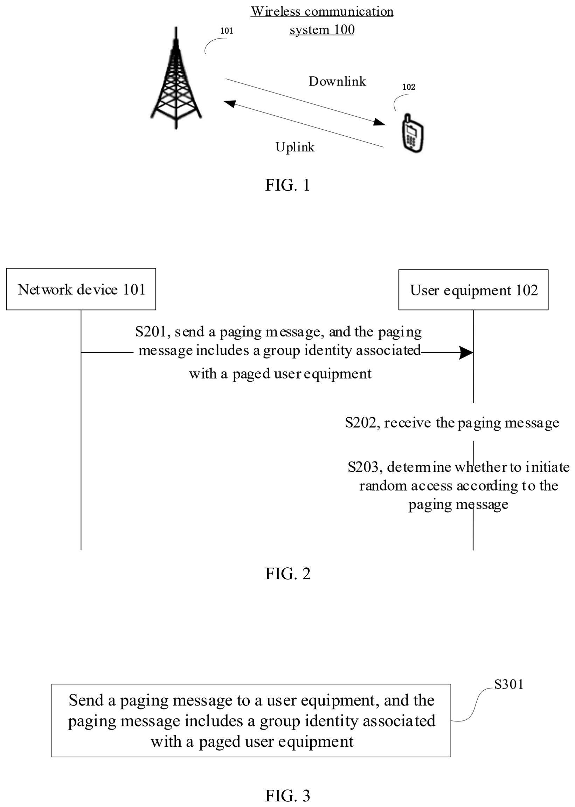

As shown in FIG. 1, a communication method provided by embodiments of the present disclosure may be applied to a wireless communication system 100, which may include a network device 101 and a user equipment 102. The user equipment 102 is configured to support carrier aggregation, and may be connected to a plurality of carrier units of the network device 101, including one primary carrier unit and one or more secondary carrier units.

It should be understood that the above wireless communication system 100 is applicable to both low frequency scenarios and high frequency scenarios. Application scenarios of the wireless communication system 100 include, but are not limited to, long term evolution (LTE) system, LTE frequency division duplex (FDD) system, LTE time division duplex (TDD) system, worldwide interoperability for microwave access (WiMAX) communication system, cloud radio access network (CRAN) system, future 5th-Generation (5G) system, new radio (NR) communication system, future-evolved public land mobile network (PLMN) system, or the like.

The user equipment 102 described above may be a terminal, an access terminal, a terminal unit, a terminal station, a mobile station (MS), a remote station, a remote terminal, a mobile terminal, a wireless communication device, a terminal agent, a terminal device, or the like. The user equipment 102 may have a wireless transceiver function, which can perform communication (e.g., wireless communication) with one or more network devices of one or more communication systems, and accept network services provided by the network device, where the network device includes, but is not limited to, the network service 101 as illustrated.

The user equipment 102 may be a cellular phone, a cordless phone, a session initiation protocol (SIP) phone, a wireless local loop (WLL) station, a personal digital assistant (PDA) device, a handheld device with wireless communication functions, a computing device or another processing device connected to wireless modems, an in-vehicle device, a wearable device, a terminal device in future 5G networks, a terminal device in future-evolved PLMN networks, or the like.

The network device 101 may be an access network device (or an access network station). The access network device refers to a device that provides a network access function, such as a radio access network (RAN) base station, and the like. The network device 101 may specifically include a base station (BS), or include a base station and a radio resource management device for controlling the base station, and the like. The network device 101 may also include a relay station (relay device), an access point, a base station in a future 5G network, a base station in a future-evolved PLMN network, an NR base station, or the like. The network device 101 may be a wearable device or a vehicle-mounted device. The network device 101 may also be a communication chip with a communication module.

For example, the first network device 101 includes, but is not limited to, a next-generation base station (gnodeB, gNB) in 5G, an evolved node B (eNB) in the LTE system, a radio network controller (RNC), a Node B (NB) in WCDMA system, a wireless controller in CRAN system, a base station controller (BSC), a base transceiver station (BTS) in GSM system or CDMA system, a home base station (e.g., home evolved nodeB; or home node B, HNB), a baseband unit (BBU), a transmitting and receiving point (TRP), a transmitting point (TP), mobile handover center, or the like.

Embodiments of the present disclosure provide a communication method. Reference is made to FIG. 2, which shows an interactive flowchart of a communication method according to an example embodiment. As shown in FIG. 2, the method includes steps S201 to S202.

Specifically, in the step S201, the network device 101 sends a paging message to the user equipment 102, and the paging message includes a group identity associated with a paged user equipment.

In some implementations, the user equipment 102 may be an Ambient IoT-based user equipment, or may be referred to as an Ambient IoT terminal.

It can be understood that in an Ambient IoT scenario, a connection density of Ambient IoT terminals is higher. For example, in an Ambient-IoT type communication network, the network device 101 needs to support the connection of a larger number of user equipments 102.

In some implementations, the group identity is used to identify a group of user equipments 102, and the group of user equipments 102 includes one or more user equipments 102 such as Ambient IoT terminals.

In some implementations, the group identity includes group identities of different types of user equipment groups, and the different types of user equipment groups are divided according to different user equipment attributes. The user equipment attribute includes, but is not limited to, a user equipment service type, a location-related attribute, or a service provider, and the like. Reference may be made to the description of the following embodiments.

In some implementations, the group identity associated with the user equipment 102 may be configured by the network device 101, or defined by a protocol, or determined by the user equipment 102 in a manner defined by the protocol.

In some implementations, a single user equipment 102 may be associated with one or more group identities, and one or more user equipments 102 to be paged by the network device 101 may be determined according to the group identity in the paging message.

In some implementations, the network device 101 may broadcast the paging message periodically.

In some implementations, the network device 101 may send paging Downlink Control Information (DCI), schedule a Physical Downlink Shared Channel (PDSCH) through the paging DCI, and carry the paging message in the PDSCH.

It can be understood that the paging DCI is scrambled by a Paging Radio Network Temporary Identity (P-RNTI).

In the step S202, the user equipment 102 receives the paging message.

In some implementations, the user equipment 102 may be any user equipment 102 in an RRC idle state or an RRC inactive state, that is, for any user equipment 102 in the RRC idle state or the RRC inactive state in a paging scenario, reference may be made to the description of embodiments of the present disclosure.

In some implementations, the user equipment 102 may periodically monitor the paging message.

In some implementations, the user equipment 102 learns, according to a configuration from the network device 101, its respective Paging Occasion (PO), and the PO occurs periodically. Each user equipment 102 corresponds to a set of periodic PO resources, or multiple user equipments 102 correspond to the same set of periodic PO resources.

In some implementations, the user equipment 102 monitors whether there is the paging DCI in its respective PO. If the user equipment 102 monitors the paging DCI, and a set information field in the paging DCI indicates that the paging DCI schedules the PDSCH containing the paging message, the user equipment 102 can receive and demodulate the PDSCH according to the indication of the paging DCI. The paging message carried in the PDSCH includes the group identity associated with the user equipment 102. The set information field is, for example, a Short Messages Indicator information field.

It can be understood that if the user equipment 102 does not monitor the paging DCI, or when the set information field of the paging DCI indicates that there is no paging message, the user equipment 102 may not receive and demodulate the PDSCH. In this scenario, it means that the user equipment 102 may not have been paged yet.

In the step S203, the user equipment 102 determines whether to initiate random access according to the paging message.

In some implementations, after obtaining the paging message, the user equipment 102 in the RRC idle state or the RRC inactive state may determine whether to initiate the random access according to the group identity indicated in the paging message.

In an example, if a paged user equipment set indicated in the paging message includes the user equipment 102, the user equipment 102 may initiate the random access to enter a RRC CONNECTED state and communicate normally with the network device 101. For a manner in which the paged user equipment set is determined according to the paging message, reference may be made to the description of the following embodiments.

In embodiments of the present disclosure, the network device 101 sends the paging message to the user equipment 102 to inform the user equipment of the group identity associated with the paged user equipment. The group identity may be group identities of multiple types of user equipment groups divided according to different user equipment attributes. Thus, in a processing of determining the paged user equipment through the group identity, the network device 101 can page user equipments 102 in more types or more dimensions of user equipment groups at one time, thereby improving the paging efficiency and being more adaptable to communication scenarios with a high connection density of user equipments 102, such as connection scenarios involving multiple user equipment groups of different types.

Embodiments of the present disclosure provide a communication method, which is performed by a network device 101. Reference is made to FIG. 3, which shows a flowchart of a communication method according to an example embodiment. As shown in FIG. 3, the method includes step S301.

Specifically, in the step S301, the network device 101 sends a paging message to the user equipment 102, and the paging message includes a group identity associated with a paged user equipment.

In some implementations, the network device 101 may broadcast the paging message periodically.

In some implementations, the network device 101 may send paging DCI, schedule a PDSCH through the paging DCI, and carry the paging message in the PDSCH.

In some implementations, the group identity is used to identify a group of user equipments 102, and the group of user equipments 102 includes one or more user equipments 102. The user equipment 102 is a user equipment 102 in a high connection density scenario.

In some implementations, the group identity includes group identities of different types of user equipment groups, and the different types of user equipment groups are divided according to different user equipment attributes.

The network device 101 can classify the user equipment 102 according to different types of user equipment attributes. The user equipment groups generated by classifying the user equipment 102 according to each type of user equipment attribute may include one or more user equipment groups, each of which includes at least one user equipment 102.

In some implementations, the user equipment attribute is one of:
a service provider;
a geographic location of the user equipment;
a priority of the user equipment; or
a service type.

In an example, the user equipments 102 are divided into different types of user equipment groups according to different types of user equipment attributes. For example, the user equipment groups include a first type group, a second type group, a third type group, and a fourth type group.

In this example, the first type group is divided according to the service provider. That is, the first type group can include multiple UE groups corresponding to different service providers. Each UE group ID can indicate the service provider corresponding to the UE group. For example, the first type group includes UE group 1 and UE group 2, UE group 1 corresponds to a first service provider, and UE group 2 corresponds to a second service provider.

The second type group is divided according to the geographic location of the user equipment. That is, the second type group can include multiple UE groups corresponding to different geographic locations. Each UE group ID can represent the geographic location corresponding to the UE group. For example, the second type group includes UE group 3 and UE group 4, UE group 3 corresponds to a first geographic location and UE group 4 corresponds to a second geographic location. It can be understood that the geographic location can refer to a geographical area in a different range or the geographic location is within the coverage of a different base station.

The third type group is divided according to the priority of the user equipment. That is, the third type group can include multiple UE groups corresponds to different priorities. Each UE group ID can indicate the priority corresponding to the UE group. For example, the third type group includes UE group 5 and UE group 6, UE group 5 corresponds to a first priority and UE group 6 corresponds to a second priority. The priority of the user equipment 102 can be pre-configured by the network device 101.

The fourth type group is divided according to the service type. That is, the fourth type group can include multiple UE groups corresponding to different service types. Each UE group ID can indicate the service type corresponding to the UE group. For example, the fourth type group includes UE group 7 and UE group 8, UE group 7 corresponds to a first service type, and UE group 8 corresponds to a second service type.

It can be understood that embodiments of the present disclosure are intended to illustrate, rather than limit, the user equipment attribute. For example, in addition to the several user equipment attributes listed above, the user equipment attribute may include more types, such as attributes of the user equipment's operating environment (temperature, humidity, etc.), or attributes of the user equipment's movement speed, etc. In short, the user equipments can be classified according to different types of user equipment attributes to generate user equipment groups of various types.

In some implementations, the user equipment 102 is associated with one or more group identities.

In an example, when the user equipment 102 is associated with one group identity, the UE group corresponding to this group identity may be a type of UE group among the first type group, the second type group, the third type group, and the fourth type group.

In another example, when the user equipment 102 is associated with multiple group identities, the multiple group identities may be group identities of different types. For example, the UE groups corresponding to the multiple group identities associated with the user equipment 102 may be at least two types of UE groups among the first type group, the second type group, the third type group, and the fourth type group.

In some implementations, the group identity associated with the user equipment 102 is defined by a protocol, or configured by the network device 101, or configured by a core network device.

In an example, the protocol may define a method or calculation manner for determining the group identity, and the user equipment 102 determines its respective group identity according to the method or calculation manner defined by the protocol.

In another example, before the step S301, the network device 101 or the core network device configures the group identity for the user equipment 102.

The core network device is connected to the user equipment 102 via the network device 101, and thus can configure the group identity for the user equipment 102 via the network device 101.

In embodiments of the present disclosure, the network device 101 sends the paging message to the user equipment 102 to inform the user equipment of the group identity of the paged user equipment. The group identity may be group identities of multiple types of user equipment groups divided according to different user equipment attributes. Thus, in a processing of determining the paged user equipment through the group identity, the network device 101 can page user equipments 102 in more types or more dimensions of user equipment groups at one time, thereby improving the paging efficiency and being more adaptable to communication scenarios with a high connection density of user equipments 102, such as connection scenarios involving multiple user equipment groups of different types.

Embodiments of the present disclosure provide a communication method, which is performed by a network device 101. The method includes step S301.

Specifically, in the step S301, the network device 101 sends a paging message to the user equipment 102, and the paging message includes a group identity associated with a paged user equipment.

The paging message includes one or more paged user equipment sets and a group identity of at least one type of user equipment group corresponding to each paged user equipment set, and each paged user equipment set is determined according to the corresponding group identity of the at least one type of user equipment group.

In some implementations, the paging message may indicate the paged user equipment set directly or indirectly. The paged user equipment set may include at least one user equipment 102.

In some implementations, the network device 101 may page one or more user equipment sets at one time, and may indicate, through the paging message, the group identity of the at least one type of UE group corresponding to each paged user equipment set.

In some implementations, at least one type of UE group may be divided according to user equipment attributes. In conjunction with the description of the above embodiments, the at least one type of user equipment group may include at least one of the first type group, the second type group, the third type group, and the fourth type group.

The first type group is divided according to the service provider, the second type group is divided according to the geographical location of the user equipment, the third type group is divided according to the priority of the user equipment, and the fourth type group is divided according to the service type.

In some implementations, each paged user equipment set is determined according to the intersection of user equipments 102 associated with the group identity of the corresponding at least one type of user equipment group.

In an example, each paged user equipment set includes a user equipment associated with group identities of all types of user equipment groups in the corresponding at least one type of user equipment group.

To facilitate understanding of embodiments of the present disclosure, a specific example is given below.

### First example

The network device 101 indicates the following two paged user equipment sets through the paging message:
paged user equipment set 1 {first type group 0, second type group 3, third type group 1, intersection}; and
paged user equipment set 2 {first type group 0, third type group 4, intersection}.

The paged user equipment set 1 indicates group identities of three types of UE groups associated with paged user equipments, that is, first type group 0, second type group 3, and third type group 1. The paged user equipment set 1 also indicates the method for determining the set, that is, the intersection of the user equipments 102 associated with the group identities of the three types of UE groups.

In this example, a set consisting of user equipments 102 associated with all the three group identities of first type group 0, second type group 3, and third type group 1 is the paged user equipment set 1. Similarly, a set consisting of user equipments 102 associated with all the two group identities of first type group 0 and third type group 4 is the paged user equipment set 2.

For the user equipment 102, it can receive the group identity pre-configured by the network device 101, for example:
group identities associated with UE 1 include: first type group 0, second type group 3, and third type group 1;
group identities associated with UE 2 include: first type group 0 and second type group 3;
group identities associated with UE 3 include: first type group 0 and third type group 4;
group identities associated with UE 4 include: first type group 0, second type group 3, and third type group 4;
a group identity associated with UE 5 includes: first type group 0; and
group identities associated with UE 6 include: first type group 0, second type group 3, fourth type group 1, and third type group 4.

Among UE 1 to UE 6, the user equipments 102 associated with three group identities of first type group 0, second type group 3, and third type group 1, i.e., the paged user equipment set 1, include UE 1 and UE 6, and then UE 1 and UE 6 are both paged. The user equipments 102 associated with two group identities of first type group 0 and third type group 4, i.e., the paged user equipment set 2, include UE 3, UE 4, and UE 6, and then UE 3, UE 4, and UE 6 are all paged.

Therefore, in this example, the network device 101 pages UE 1, UE 6, UE 3 and UE 4 through one paging message.

In some implementations, each paged user equipment set is determined by the union of user equipments 102 associated with the group identity of the corresponding at least one type of user equipment group.

In an example, each paged user equipment set includes a user equipment associated with a group identity of any type of user equipment group in the corresponding at least one type of user equipment group.

To facilitate understanding of embodiments of the present disclosure, a specific example is given below.

### Second example

The network device 101 indicates the following two paged user equipment sets through the paging message:
paged user equipment set 3 {second type group 1};
paged user equipment set 4 {fourth type group 2}; and
paged user equipment set 5 {first type group 0, second type group 3}.

The paged user equipment set 3 indicates a group identity of a type of UE group associated with the paged user equipment, that is, second type group 1. The paged user equipment set 3 is the group identity of this type of UE group, that is, the user equipment 102 associated with second type group 1. Similarly, the paged user equipment set 4 is a user equipment 102 associated with fourth type group 2, and the paged user equipment set 5 includes a user equipment 102 associated with first type group 0 and a user equipment 102 associated with second type group 3.

For the user equipment 102, it can receive the group identity pre-configured by the network device 101, for example:
group identities associated with UE 1' include: first type group 0, and second type group 1;
a group identity associated with UE 2' includes: fourth type group 2;
group identities associated with UE 3' include: second type group 2 and second type group 3; and
a group identity associated with UE 4' includes: first type group 0.

Among UE 1' to UE 4', the paged user equipment set 3 includes UE 1', the paged user equipment set 4 includes UE 2', and the paged user equipment set 5 includes UE 3' and UE 4'.

Therefore, in this example, the network device 101 pages UE 1', UE 2', UE 3' and UE 4' through one paging message.

In embodiments of the present disclosure, the network device 101 can indicate the paged user equipment set through the paging message, so that the user equipment 102 can determine whether it is paged based on whether it belongs to the paged user equipment set, and initiate the random access in time when being paged to establish communication in time.

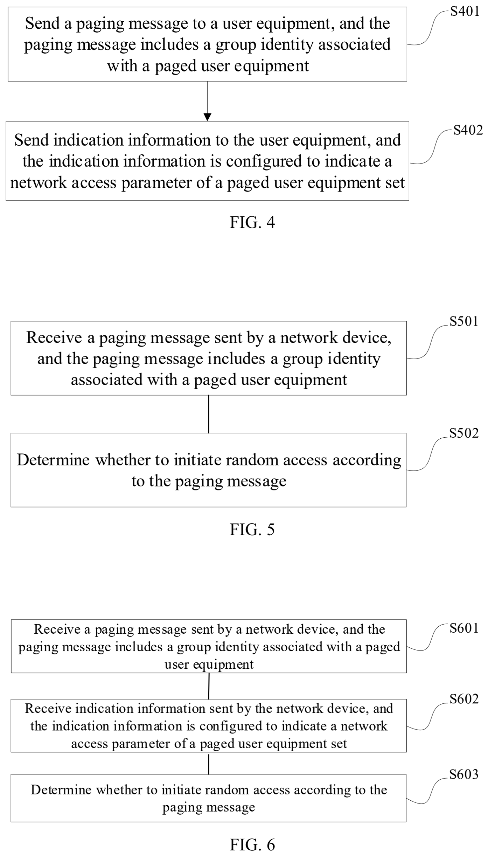

Embodiments of the present disclosure provide a communication method, which is performed by a network device 101. Reference is made to FIG. 4, which shows a flowchart of a communication method according to an example embodiment. As shown in FIG. 4, the method includes step S401.

Specifically, in the step S401, the network device 101 sends a paging message to the user equipment 102, and the paging message includes a group identity associated with a paged user equipment.

In some implementations, the user equipment may be associated with one or more group identities. When the user equipment is associated with multiple group identities, the multiple group identities may not distinguish between types of user equipment attributes. For example, the types of user equipment attributes corresponding to the multiple group identities are all service types, and the multiple group identities correspond to different service types, respectively.

In some implementations, the user equipment may be associated with one or more group identities. When the user equipment is associated with multiple group identities, the multiple group identities correspond to different types of user equipment attributes, respectively. In this case, for the implementation of the step S401, reference may be made to the description of the previous embodiments, for example, reference may be made to the implementation of the step S301, which will not be repeated here.

In the step S402, the network device 101 sends indication information to the user equipment 102, and the indication information is configured to indicate a network access parameter of a paged user equipment set.

The paged user equipment set involved in the indication information includes at least one user equipment 102 paged in the paging message by the network device 101. For example, the paged user equipment set can be determined by the group identity indicated in the paging message.

In some implementations, the implementations of the steps S401 and S402 are merely illustrative and not limiting. For example, the indication information may be included in the paging message, that is, the indication information is sent synchronously with the paging message.

In some implementations, the indication information and the paging message are sent separately, for example, the network device 101 sends the indication information in a broadcast manner. The user equipment 102 in the RRC idle state or inactive state can receive the indication information.

In some implementations, the network device 101 may page one or more user equipment sets at one time.

In some implementations, the indication information may indicate a network access parameter applicable to multiple paged user equipment sets, or a corresponding network access parameter is configured for each paged user equipment set.

In some implementations, the indication information includes a network access parameter corresponding to each paged user equipment set.

In an example, the user equipment set may be indicated by the paging message. For example, the paging message may indicate at least one paged user equipment set and a group identity of at least one type of UE group corresponding to each paged user equipment set. The paged user equipment set is determined according to the group identity of the at least one type of UE group.

In this example, at least one type of UE group may be divided according to user equipment attributes. In conjunction with the description of the above embodiments, the at least one type of user equipment group may include at least one of the first type group, the second type group, the third type group, and the fourth type group. The first type group is divided according to the service provider, the second type group is divided according to the geographical location of the user equipment, the third type group is divided according to the priority of the user equipment, and the fourth type group is divided according to the service type.

In this example, each paged user equipment set may be determined based on the intersection or union of user equipments 102 associated with the group identity of the corresponding at least one type of UE group. For the method for determining the paged user equipment set, reference may be made to the description of the foregoing embodiments, for example, reference may be made to the description of the first and second examples, which will not be repeated here.

In this example, the network device 101 configures the corresponding network access parameter for each paged user equipment set. For example, in combination with the first example, the network device 101 configures a first set of network access parameters for the paged user equipment set 1 and a second set of network access parameters for the paged user equipment set 2, and the first set of network access parameters is different from the second set of network access parameters.

In some implementations, the network access parameter includes at least one of:
a backoff duration for the random access;
a frequency domain location of a random access resource; or
a code domain resource of the random access resource.

In an example, each paged user equipment set may be correspondingly configured with a set of network access parameters, which may include the backoff duration, the frequency domain location, and the code domain resource. For different paged user equipment sets, at least one of the backoff duration, the frequency domain location, and the code domain resource may be different.

In an example, when the network device 101 pages multiple user equipment sets at one time, network access parameters of different paged user equipment sets are different, which can reduce conflicts when different user equipments 102 initiate the random access. Reference may be made to the description of the following examples.

In an example, two paged user equipment sets are taken as an example for illustration, and for more user equipment sets, reference may be made to this example description. If paged user equipment set 1 and paged user equipment set 2 have different backoff durations, then a user equipment 102 in the paged user equipment set 1 and a user equipment 102 in the paged user equipment set 2 will initiate random access within different time periods, thereby avoiding a situation where user equipments 102 belonging to different user equipment sets perform the random access within the same or similar time period to cause the random access resource conflicts.

For example, assuming that the network device 101 configures a backoff duration of 0ms for the paged user equipment set 1 and a backoff duration of 40ms for the paged user equipment set 2. The user equipment 102 in the paged user equipment set 1 does not need to back off after receiving the paging message and can instead select a nearby random access resource to initiate the random access. The user equipment 102 in the paged user equipment set 2 needs to wait for the backoff duration of 40ms after receiving the paging message before selecting a random access resource to initiate the random access.

In an example, two paged user equipment sets are taken as an example for illustration, and for more user equipment sets, reference may be made to this example description. The network device 101 can configure multiple PhysicalRandom Access Channels (PRACHs) in the frequency domain. If the paged user equipment set 1 and the paged user equipment set 2 correspond to different frequency domain locations of random access resources, the paged user equipment set 1 and the paged user equipment set 2 will initiate the random access on PRACHs corresponding to different frequency domains, thereby reducing or avoiding conflicts between user equipments 102 belonging to different user equipment sets during the random access.

In an example, two paged user equipment sets are still taken as an example for illustration, and for more user equipment sets, reference may be made to this example description. The network device 101 can configure different code domain resources. For example, if the paging user equipment set 1 and the paging user equipment set 2 correspond to different preamble sets, then during the process of the paging user equipment set 1 and the paging user equipment set 2 initiating the random access, even if there is a conflict in time domain and/or frequency domain resource locations, different preambles can be used to distinguish user equipments 102 belonging to different user equipment sets, thereby reducing or avoiding conflicts between the user equipments 102 belonging to different user equipment sets during the random access process.

In embodiments of the present disclosure, the network device 101 can configure corresponding network access parameters for different paged user equipment sets, thereby avoiding or reducing resource conflicts between user equipments 102 belonging to different user equipment sets during the random access process, and improving the efficiency and success rate of random access.

Embodiments of the present disclosure provide a communication method, which is performed by a user equipment 102. Reference is made to FIG. 5, which shows a flowchart of a communication method according to an example embodiment. As shown in FIG. 5, the method includes steps S501 to S502.

Specifically, in the step S501, the user equipment 102 receives a paging message sent by the network device 101, and the paging message includes a group identity associated with a paged user equipment.

In some implementations, the user equipment 102 may be any user equipment 102 in an RRC idle state or an RRC inactive state.

In some implementations, the user equipment 102 learns, according to a configuration from the network device 101, its respective PO, and the PO occurs periodically. Each user equipment 102 corresponds to a set of periodic PO resources, or multiple user equipments 102 correspond to the same set of periodic PO resources.

In some implementations, the user equipment 102 monitors whether there is the paging DCI in its respective PO. If the user equipment 102 monitors the paging DCI, and a set information field in the paging DCI indicates that the paging DCI schedules the PDSCH containing the paging message, the user equipment 102 can receive and demodulate the PDSCH according to the indication of the paging DCI. The paging message carried in the PDSCH includes the group identity associated with the user equipment 102. The set information field is, for example, a Short Messages Indicator information field.

In some implementations, the group identity is used to identify a group of user equipments 102, and one user equipment 102 may be associated with one or more group identities.

In some implementations, the group identity associated with the user equipment 102 is defined by a protocol, or configured by the network device 101, or configured by a core network device.

In some implementations, the group identity includes group identities of different types of user equipment groups, and the different types of user equipment groups are divided according to different user equipment attributes.

The network device 101 can classify the user equipment 102 according to different types of user equipment attributes. The user equipment groups generated by classifying the user equipment 102 according to each type of user equipment attribute may include one or more user equipment groups, each of which includes at least one user equipment 102.

In some implementations, the user equipment attribute is one of:
a service provider;
a geographic location of the user equipment;
a priority of the user equipment; or
a service type.

For example, when the user equipment 102 is associated with one group identity, the UE group corresponding to this group identity may be a type of UE group among the first type group, the second type group, the third type group, and the fourth type group.

For another example, when the user equipment 102 is associated with multiple group identities, the multiple group identities may be group identities of different types. For example, the UE groups corresponding to the multiple group identities associated with the user equipment 102 may be at least two types of UE groups among the first type group, the second type group, the third type group, and the fourth type group.

The first type group is divided according to the service provider, the second type group is divided according to the geographical location of the user equipment, the third type group is divided according to the priority of the user equipment, and the fourth type group is divided according to the service type.

It can be understood that embodiments of the present disclosure are intended to illustrate, rather than limit, the user equipment attribute. For example, in addition to the several user equipment attributes listed above, the user equipment attribute may include more types, such as attributes of the user equipment's operating environment (temperature, humidity, etc.), or attributes of the user equipment's movement speed, etc. In short, the user equipments can be classified according to different types of user equipment attributes to generate user equipment groups of various types.

In the step S502, the user equipment 102 determines whether to initiate random access according to the paging message.

In some implementations, if a paged user equipment set indicated in the paging message includes the user equipment 102, the user equipment 102 may initiate the random access to enter a RRC connected state and communicate normally with the network device 101. For a manner in which the paged user equipment set is determined according to the paging message, reference may be made to the description of the aforementioned embodiments.

In embodiments of the present disclosure, the user equipment 102 receives the paging message sent by the network device 101 to learn the group identity associated with the paged user equipment, so that in a processing of determining the paged user equipment through the group identity, the network device 101 can page more user equipments 102 at one time, improving paging efficiency and making it more suitable for communication scenarios with a high connection density of the user equipment 102.

Embodiments of the present disclosure provide a communication method, which is performed by a user equipment 102. The method includes steps S501 to S502.

Specifically, in the step S501, the user equipment 102 receives a paging message sent by the network device 101, and the paging message includes a group identity associated with a paged user equipment.

In the step S502, the user equipment 102 determines whether to initiate random access according to the paging message.

The paging message includes one or more paged user equipment sets and a group identity of at least one type of user equipment group corresponding to each paged user equipment set, and each paged user equipment set is determined according to the corresponding group identity of the at least one type of user equipment group.

It can be understood that for the implementations of the steps S501 to S502, reference may be made to the description of the above embodiments.

In some implementations, the network device 101 may page one or more user equipment sets at one time, and may indicate, through the paging message, the group identity of the at least one type of UE group corresponding to each paged user equipment set.

In some implementations, each paged user equipment set may include at least one user equipment 102.

In some implementations, at least one type of UE group may be divided according to user equipment attributes. In conjunction with the description of the above embodiments, the at least one type of user equipment group may include at least one of the first type group, the second type group, the third type group, and the fourth type group.

The first type group is divided according to the service provider, the second type group is divided according to the geographical location of the user equipment, the third type group is divided according to the priority of the user equipment, and the fourth type group is divided according to the service type.

In some implementations, each paged user equipment set is determined according to the intersection of user equipments 102 associated with the group identity of the corresponding at least one type of user equipment group.

In an example, the step S502 may include step S502'.

Specifically, in the step S502', when the user equipment 102 belongs to any paged user equipment set, it initiates the random access to the network device 101. Each paged user equipment set includes a user equipment associated with group identities of all types of user equipment groups in the corresponding at least one type of user equipment group.

For the implementation of this example, reference may be made to the first example in the aforementioned embodiments, which will not be repeated here.

In some implementations, each paged user equipment set is determined by the union of user equipments 102 associated with the group identity of the corresponding at least one type of user equipment group.

In an example, each paged user equipment set includes a user equipment associated with a group identity of any type of user equipment group in the corresponding at least one type of user equipment group.

For the implementation of this example, reference may be made to the second example in the aforementioned embodiments, which will not be repeated here.

In embodiments of the present disclosure, according to the paged user equipment set indicated by the paging message, the user equipment 102 can determine whether it is paged based on whether it belongs to the paged user equipment set, and initiate the random access in time when being paged to establish communication in time.

Embodiments of the present disclosure provide a communication method, which is performed by a user equipment 102. Reference is made to FIG. 6, which shows a flowchart of a communication method according to an example embodiment. As shown in FIG. 6, the method includes steps S601 to S603.

Specifically, in the step S601, the user equipment 102 receives a paging message sent by the network device 101, and the paging message includes a group identity associated with a paged user equipment.

For the implementation of the step S601, reference may be made to the implementation of the step S501, which will not be described in detail here.

In the step S602, the user equipment 102 receives indication information sent by a network device, and the indication information is configured to indicate a network access parameter of a paged user equipment set.

In some implementations, the implementations of the steps S601 and S602 are merely illustrative and not limiting. For example, the indication information may be included in the paging message, that is, the indication information may be sent synchronously by sending the paging message.

In some implementations, the indication information and the paging message are sent separately, for example, the network device 101 sends the indication information in a broadcast manner. The user equipment 102 in the RRC idle state or inactive state can receive the indication information and the paging message, respectively.

In some implementations, the network device 101 may page multiple user equipment sets at one time, and the indication information may indicate a network access parameter applicable to multiple paged user equipment sets, or a corresponding network access parameter is configured for each paged user equipment set.

In some implementations, the indication information includes a network access parameter corresponding to each paged user equipment set. For the implementation of this embodiment, reference may be made to the description of the aforementioned embodiments, which will not be repeated here.

In some implementations, the network access parameter includes at least one of:
a backoff duration for the random access;
a frequency domain location of a random access resource; or
a code domain resource of the random access resource.

For the implementation corresponding to a situation where any network access parameter is different, reference may be made to the description of the above embodiments, which will not be repeated here.

In the step S603, the user equipment 102 determines whether to initiate random access according to the paging message.

In some implementations, for the implementation of the step S603, reference may be made to the implementations of the step S502 or S502', which will not be repeated here.

In some implementations, the step S603 may include the following step S603'.

Specifically, in the step S603', when the random access needs to be initiated, the user equipment 102 initiates the random access according to the network access parameter corresponding to the paged user equipment set to which it belongs.

When the user equipment 102 belongs to any paged user equipment set, it will initiate the random access according to the network access parameter corresponding to the paged user equipment set where it is located.

For example, in conjunction with the description of the foregoing embodiments, if the user equipment 102 belongs to the paged user equipment set 1, it initiates the random access according to the network access parameter corresponding to the paged user equipment set 1. Thus, user equipments 102 belonging to different paged user equipment sets can effectively avoid or reduce random access resource conflicts during the random access initiation.

For the description of this implementation, reference may also made to the description of the aforementioned embodiments, which is not fully described here.

In embodiments of the present disclosure, the network device 101 can configure corresponding network access parameters for different paged user equipment sets. When the user equipment 102 needs to initiate the random access, it can initiate the random access according to the network access parameter corresponding to the paged user equipment set, thereby avoiding or reducing resource conflicts between user equipments 102 belonging to different user equipment sets during the random access process, and improving the efficiency and success rate of random access.

To facilitate understanding of embodiments of the present disclosure, some specific examples are listed below.

### Example 1

The network device 101 sends a paging message to the user equipment 102, and the paging message includes a group identity associated with a paged user equipment.

The group identity is used to identify a group of user equipments 102, and the group of user equipments 102 includes one or more user equipments 102 such as Ambient IoT terminals.

### Example 2

The network device 101 sends a paging message to the user equipment 102, and the paging message includes a group identity associated with a paged user equipment.

One user equipment 102 may be associated with one or more group identities. For example, one user equipment 102 may be associated with multiple different types of group identities.

Different types of user equipment groups are divided according to different user equipment attributes, and the user equipment attribute includes the service provider, the geographic location of the user equipment, the priority of the user equipment, and the service type.

For example, the user equipment group includes the first type group, the second type group, the third type group, and the fourth type group.

The first type group is divided according to the service provider, and different UE group IDs may represent different service providers.

The second type group is divided according to the geographical location of the user equipment, and different UE group IDs may represent different geographical locations.

The third type group is divided according to the priority of the user equipment, and different UE group IDs can represent priorities corresponding to the UE groups.

The fourth type group is divided according to the service type, and different UE group IDs can represent different service types.

The group identity associated with the user equipment 102 may be configured by a core network device, or by the network device 101, or determined by the user equipment 102 according to a calculation method defined by a protocol. When the user equipment 102 is associated with multiple group identities, each group identity may be determined in one of three ways.

### Example 3

The network device 101 sends a paging message to the user equipment 102, and the paging message includes a group identity associated with a paged user equipment.

One user equipment 102 may be associated with one or more group identities. For example, one user equipment 102 may be associated with multiple different types of group identities. Different types of user equipment groups are divided according to different user equipment attributes, and the user equipment attribute includes the service provider, the geographic location of the user equipment, the priority of the user equipment, and the service type.

For example, the user equipment group includes the first type group, the second type group, the third type group, and the fourth type group. The first type group is divided according to the service provider, the second type group is divided according to the geographical location of the user equipment, the third type group is divided according to the priority of the user equipment, and the fourth type group is divided according to the service type.

In this example, the paging message includes one or more paged user equipment sets and a group identity of at least one type of user equipment group corresponding to each paged user equipment set, and each paged user equipment set is determined according to the corresponding group identity of the at least one type of user equipment group.

The paged user equipment set may be determined through the intersection or union of multiple types of group identities.

For example, among the user equipments 102 associated with different types of group identities, the user equipment 102 associated with both the group ID of the first type group and the group ID of the second type group belongs to the paged user equipment set. Alternatively, the user equipment 102 associated with either the group ID of the first type group or the group ID of the second type group belongs to the paged user equipment set.

### A user equipment 102 association

### Example 4

The network device 101 sends a paging message to the user equipment 102, and the paging message includes a group identity associated with a paged user equipment.

One user equipment 102 may be associated with one or more group identities. For example, one user equipment 102 may be associated with multiple different types of group identities. Different types of user equipment groups are divided according to different user equipment attributes, and the user equipment attribute includes the service provider, the geographic location of the user equipment, the priority of the user equipment, and the service type.

For example, the user equipment group includes the first type group, the second type group, the third type group, and the fourth type group. The first type group is divided according to the service provider, the second type group is divided according to the geographical location of the user equipment, the third type group is divided according to the priority of the user equipment, and the fourth type group is divided according to the service type.

The network device 101 can page one or more user equipment sets at one time. When the network device 101 pages multiple user equipment sets, it can configure a corresponding network access parameter for each user equipment set to reduce conflicts when different user equipments 102 initiate the random access. The network access parameter includes at least one of the backoff duration for the random access, the frequency domain location of the random access resource, and the code domain resource of the random access resource.

For example, the network access parameter may be the backoff duration for the random access, and different paged user equipment sets perform the random access within different time periods, thereby avoiding a situation where multiple paged UE groups perform the random access within the same or similar time period to cause the random access resource conflicts.

The network access parameter may also be the frequency domain position of the random access resource. The network device 101 may configure multiple PRACHs in the frequency domain, and different user equipment sets may correspond to PRACHs in different frequency domains.

The network access parameter may also be the code domain resource of the random access resource, and different user equipment sets correspond to different preamble sets. In this way, even if different user equipment sets conflict in the time-frequency domain resources when initiating the random access, different UEs can also be distinguished by different preambles, avoiding or reducing conflicts during the random access.

### Example 5

The network device 101 sends a paging message to the user equipment 102, and the paging message includes a group identity associated with a paged user equipment.

The network device 101 may page one or more user equipment sets at one time.

The network device 101 can configure a corresponding network access parameter for each user equipment set to reduce conflicts when different user equipments 102 initiate random access. The network access parameter includes at least one of the backoff duration for the random access, the frequency domain location of the random access resource, and the code domain resource of the random access resource.

### Example 6

The network device 101 sends a paging message to the user equipment 102, and the paging message includes a group identity associated with a paged user equipment.

In this example, one user equipment 102 may be associated with one or more group identities. For example, one user equipment 102 may be associated with multiple different types of group identities. Different types of user equipment groups are divided according to different user equipment attributes, and the user equipment attribute includes the service provider, the geographic location of the user equipment, the priority of the user equipment, and the service type.

For example, the user equipment group includes the first type group, the second type group, the third type group, and the fourth type group. The first type group is divided according to the service provider, the second type group is divided according to the geographical location of the user equipment, the third type group is divided according to the priority of the user equipment, and the fourth type group is divided according to the service type.

In this example, the paging message includes one or more paged user equipment sets and a group identity of at least one type of user equipment group corresponding to each paged user equipment set, and each paged user equipment set is determined according to the corresponding group identity of the at least one type of user equipment group. For example, the paged user equipment set may be determined through the intersection or union of multiple types of group identities.

In this example, the network device 101 can configure the corresponding network access parameter for each user equipment set to reduce conflicts when different user equipments 102 initiate the random access. The network access parameter includes at least one of the backoff duration for the random access, the frequency domain location of the random access resource, and the code domain resource of the random access resource. The user equipments 102 belonging to different paged user equipment sets initiate the random access based on the network access parameters corresponding to the paged user equipment sets where the user equipments 102 are located.

It can be understood that for the implementations in the above examples, reference may be made to the description of the aforementioned embodiments, which will not be repeated here.

Based on the same concept as the above method embodiments, embodiments of the present disclosure further provide a communication device, which may have the functions of the network device 101 in the above method embodiments, and can be configured to perform steps performed by the network device 101 according to the above method embodiments. These functions may be implemented by hardware, or may be implemented by software or by hardware executing corresponding software. The hardware or software includes one or more modules corresponding to the above functions.

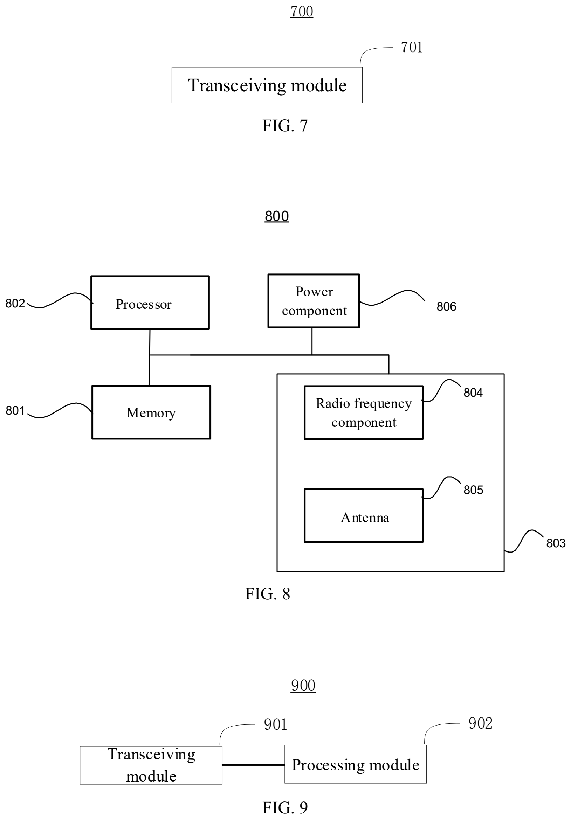

In an implementation, a device 700 shown in FIG. 7 may serve as the network device 101 involved in the above method embodiments, and perform the steps performed by the network device 101 in the above method embodiments. As shown in FIG. 7, the device 700 may include a transceiving module 701, and the transceiving module 701 may be configured to support the communication device to communicate. The transceiving module 701 may have a wireless communication function, for example, being able to wirelessly communicate with other communication devicees through a wireless air interface.

When performing the steps implemented by the network device 101, the transceiving module 701 is configured to send a paging message to a user equipment, and the paging message includes a group identity associated with a paged user equipment.

When the communication device is the network device 101, its structure may also be as shown in FIG. 8. The structure of the communication device will be described by taking the base station as an example. As shown in FIG. 8, a device 800 includes a memory 801, a processor 802, a transceiving component 803, and a power component 806. The memory 801 is coupled with the processor 802, and may be configured to store programs and data necessary for the communication device 800 to realize various functions. The processor 802 is configured to support the communication device 800 to perform the corresponding functions in the above-mentioned methods, and the functions can be implemented by invoking programs stored in the memory 801. The transceiving component 803 may be a wireless transceiver, and may be configured to support the communication device 800 to receive signaling and/or data, and to transmit signaling and/or data through a wireless air interface. The transceiving component 803 may also be referred to as a transceiver unit or a communication unit, and the transceiving component 803 may include a radio frequency component 804 and one or more antennas 805. The radio frequency component 804 may be a remote radio unit (RRU), and may be specifically used for the transmission of radio frequency signals and conversion between radio frequency signals and baseband signals. The one or more antennas 805 may be specifically used for radiation and reception of radio frequency signals.

When the communication device 800 needs to send data, the processor 802 may carry out baseband processing on the data to be sent, and output the baseband signal to the radio frequency unit. The radio frequency unit carries out the radio frequency processing on the baseband signal and sends the radio frequency signal through the antenna in the form of electromagnetic waves. When data is sent to the communication device 800, the radio frequency unit receives the radio frequency signal through the antenna, converts the radio frequency signal into the baseband signal, and outputs the baseband signal to the processor 802. Then the processor 802 converts the baseband signal into data and process the data.

Based on the same concept as the above method embodiments, embodiments of the present disclosure further provide a communication device, which may have the functions of the user equipment 102 in the above method embodiments, and can be configured to perform steps performed by the user equipment 102 according to the above method embodiments. These functions may be implemented by hardware, or may be implemented by software or by hardware executing corresponding software. The hardware or software includes one or more modules corresponding to the above functions.

In an implementation, an apparatus 900 shown in FIG. 9 may be used as the user equipment 102 involved in the above method embodiments, and perform the steps performed by the user equipment 102 in the above method embodiments. As shown in FIG. 9, the apparatus 900 may include a transceiving module 901 and a processing module 902 coupled to each other, the transceiving module 901 may be configured to support the communication device to communicate, and the processing module 902 may be used by the communication device to perform processing operations, such as generating information/messages to be sent or processing received signals to obtain information/messages.

When performing the steps implemented by the user equipment 102, the transceiving module 901 is configured to receive a paging message sent by a network device, and the paging message includes a group identity associated with a paged user equipment.

The processing module 902 is configured to determine whether to initiate random access according to the paging message.

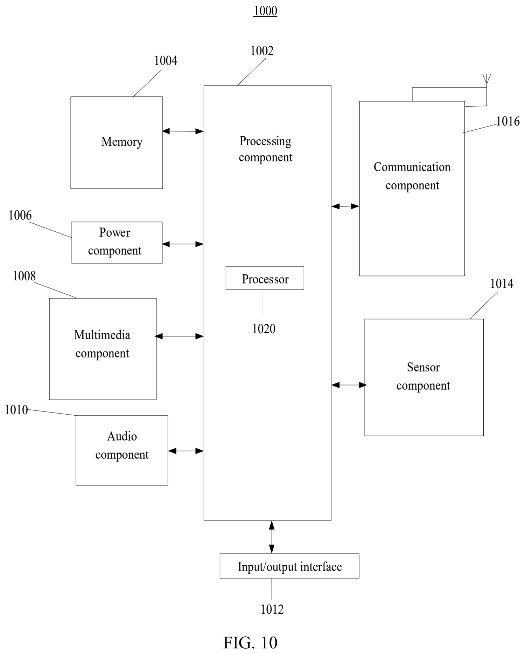

When the apparatus is the user equipment 102, its structure may also be as shown in FIG. 10. The apparatus 1000 may be a mobile phone, a computer, a digital broadcast terminal, a messaging device, a gaming console, a tablet device, a medical device, an exercise device, a personal digital assistant, etc.

Referring to FIG. 10, the apparatus 1000 may include one or more of the following components: a processing component 1002, a memory 1004, a power component 1006, a multimedia component 1008, an audio component 1100, an input/output (I/O) interface 1012, a sensor component 1014, and a communication component 1016.

The processing component 1002 typically controls overall operations of the apparatus 1000, such as the operations associated with display, telephone calls, data communications, camera operations, and recording operations. The processing component 1002 may include one or more processors 1020 to execute instructions to perform all or part of the steps in the above described methods. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the apparatus 1000. Examples of such data include instructions for any applications or methods operated on the apparatus 1000, contact data, phonebook data, messages, pictures, video, etc. The memory 1004 may be implemented using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the apparatus 1000. The power component 1006 may include a power management system, one or more power sources, and any other components associated with the generation, management, and distribution of power in the apparatus 1000.

The multimedia component 1008 includes a screen providing an output interface between the apparatus 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 1008 includes a front camera and/or a rear camera. The front camera and the rear camera may receive an external multimedia datum while the apparatus 1000 is in an operation mode, such as a photographing mode or a video mode. Each of the front camera and the rear camera may be a fixed optical lens system or have focus and optical zoom capability.

The audio component 1100 is configured to output and/or input audio signals. For example, the audio component 1100 includes a microphone (MIC) configured to receive an external audio signal when the apparatus 1000 is in an operation mode, such as a call mode, a recording mode, and a voice recognition mode. The received audio signal may be further stored in the memory 1004 or transmitted via the communication component 1016. In some embodiments, the audio component 1100 further includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide state assessments of various aspects of the apparatus 1000. For instance, the sensor component 1014 may detect an open/closed state of the apparatus 1000, relative positioning of components, e.g., the display and the keypad, of the apparatus 1000, a change in position of the apparatus 1000 or a component of the apparatus 1000, a presence or absence of user contact with the apparatus 1000, an orientation or an acceleration/deceleration of the apparatus 1000, and a change in temperature of the apparatus 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communication, wired or wirelessly, between the apparatus 1000 and other devices. The apparatus 1000 may access a wireless network based on a communication standard, such as WiFi, 2G, or 3G, or a combination thereof. In an embodiment, the communication component 1016 receives a broadcast signal or broadcast associated information from an external broadcast management system via a broadcast channel. In an embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment of the present disclosure, the apparatus 1000 may be implemented with one or more application specific integrated circuits (ASICs), digital signal processors (DSPs), digital signal processing devices (DSPDs), programmable logic devices (PLDs), field programmable gate arrays (FPGAs), controller, micro-controller, microprocessors, or other electronic components, for performing the above described methods.

In an embodiment of the present disclosure, there is further provided a non-transitory computer readable storage medium including instructions, such as the memory 1004 including instructions, the above instructions may be executed by the processor 1020 in the apparatus 1000 for performing the above-described methods. For example, the non-transitory computer-readable storage medium may be a ROM, a Random Access Memory (RAM), a CD-ROM, a magnetic tape, a floppy disc, an optical data storage device, and the like.

Other implementations of embodiments of the present disclosures will readily occur to those skilled in the art upon consideration of the specification and practice of the present disclosure. The present disclosure is intended to cover any variations, uses, or adaptations of embodiments of the present disclosures that follow the general principles of embodiments of the present disclosures and include common general knowledge or conventional technical means in the art not disclosed in the present disclosure. The specification and examples are to be regarded as exemplary only, with the actual scope and spirit of embodiments of the present disclosure being indicated by the following claims.

It should be understood that some embodiments of the present disclosure are not limited to the precise structures described above and illustrated in the accompanying drawings, and that various modifications and changes may be made without departing from the scope thereof. The scope of embodiments of the present disclosure is limited only by the appended claims.

### Industrial Applicability

In the method of the present disclosure, the network device sends the paging message to the user equipment to inform the user equipment of the group identity of the paged user equipment, so that in a processing of determining the paged user equipment through the group identity, the network device can page more user equipments at one time, improving paging efficiency and making it more suitable for communication scenarios with a high density of user equipment connections.

## Claims

1. A communication method, performed by a network device, and comprising:
sending a paging message to a user equipment, wherein the paging message comprises a group identity associated with a paged user equipment.

2. The method according to claim 1, wherein the group identity comprises group identities of different types of user equipment groups, and the different types of user equipment groups are divided according to different user equipment attributes.

3. The method according to claim 2, wherein the user equipment is associated with one or more group identities.

4. The method according to any one of claims 1 to 3, wherein the paging message comprises one or more paged user equipment sets and a group identity of at least one type of user equipment group corresponding to each paged user equipment set, and each paged user equipment set is determined according to the group identity of the corresponding at least one type of user equipment group.

5. The method according to claim 4, wherein each paged user equipment set comprises a user equipment associated with group identities of all types of user equipment groups in the corresponding at least one type of user equipment group.

6. The method according to any one of claims 1 to 5, further comprising:
sending indication information to the user equipment, wherein the indication information is configured to indicate a network access parameter of a paged user equipment set.

7. The method according to claim 6, wherein the indication information comprises a network access parameter corresponding to each paged user equipment set.

8. The method according to claim 6 or 7, wherein the network access parameter comprises at least one of:
a backoff duration for random access;
a frequency domain location of a random access resource; or
a code domain resource of the random access resource.

9. The method according to any one of claims 2 to 7, wherein a user equipment attribute is one of:
a service provider;
a geographic location of the user equipment;
a priority of the user equipment; or
a service type.

10. The method according to any one of claims 1 to 9, wherein a group identity associated with the user equipment is defined by a protocol, or configured by the network device, or configured by a core network device.

11. A communication method, performed by a user equipment, and comprising:
receiving a paging message sent by a network device, wherein the paging message comprises a group identity associated with a paged user equipment; and
determining whether to initiate random access according to the paging message.

12. The method according to claim 11, wherein the group identity comprises group identities of different types of user equipment groups, and the different types of user equipment groups are divided according to different user equipment attributes.

13. The method according to claim 11 or 12, wherein the paging message comprises one or more paged user equipment sets and a group identity of at least one type of user equipment group corresponding to each paged user equipment set, and each paged user equipment set is determined according to the group identity of the corresponding at least one type of user equipment group.

14. The method according to claim 13, wherein determining whether to initiate the random access according to the paging message comprises:
when the user equipment belongs to any paged user equipment set, initiating the random access to the network device;
wherein each paged user equipment set comprises a user equipment associated with group identities of all types of user equipment groups in the corresponding at least one type of user equipment group.

15. The method according to any one of claims 11 to 14, further comprising:
receiving indication information sent by the network device, wherein the indication information is configured to indicate a network access parameter of a paged user equipment set.

16. The method according to claim 15, wherein the indication information comprises a network access parameter corresponding to each paged user equipment set.

17. The method according to claim 15 or 16, wherein the network access parameter comprises at least one of:
a backoff duration for random access;
a frequency domain location of a random access resource; or
a code domain resource of the random access resource.

18. The method according to claim 17, wherein determining whether to initiate the random access according to the paging message comprises:
when it is required to initiate the random access, initiating the random access according to a network access parameter corresponding to a paged user equipment set to which the user equipment belongs.

19. The method according to any one of claims 12 to 18, wherein a user equipment attribute is one of:
a service provider;
a geographic location of the user equipment;
a priority of the user equipment; or
a service type.

20. The method according to any one of claims 11 to 18, wherein a group identity associated with the user equipment is defined by a protocol, or configured by the network device, or configured by a core network device.

21. A communication device, configured in a network device, and comprising:
a transceiving module, configured to send a paging message to a user equipment, wherein the paging message comprises a group identity associated with a paged user equipment.

22. A communication device, configured in a user equipment, and comprising:
a transceiving module, configured to receive a paging message sent by a network device, wherein the paging message comprises a group identity associated with a paged user equipment; and
a processing module, configured to determine whether to initiate random access according to the paging message.

23. A network device, comprising a processor and a memory, wherein:
the memory is configured to store a computer program; and
the processor is configured to execute the computer program to implement the method according to any one of claims 1 to 10.

24. A user equipment, comprising a processor and a memory, wherein:
the memory is configured to store a computer program; and
the processor is configured to execute the computer program to implement the method according to any one of claims 11 to 20.

25. A computer-readable storage medium having instructions stored thereon, wherein the instructions, when invoked and executed on a computer, cause the computer to perform the method according to any one of claims 1 to 10.

26. A computer-readable storage medium having instructions stored thereon, wherein the instructions, when invoked and executed on a computer, cause the computer to perform the method according to any one of claims 11 to 20.
